Europäisches Patentamt

European Patent Office

Office européen des brevets

(11) Publication number: 0 485 015 A1

# EUROPEAN PATENT APPLICATION

(21) Application number: 91202812.3

(22) Date of filing: 30.10.91

(51) Int. Cl.5: A01C 9/00, A01C 11/02

(30) Priority: 05.11.90 IT 8263490

(43) Date of publication of application:
13.05.92 Bulletin 92/20

(84) Designated Contracting States:
AT DE ES FR NL

(71) Applicant: COSTRUZIONI MECCANICHE E
TERMOIDRAULICHE DI SFOGGIA NARCISO
Via Feltrine Sud, 170
I-31030 Biadene di Montebelluna
(Treviso)(IT)

(72) Inventor: Narciso, Sfoggia
Via Consolata, 1
I-31030 Biadene di Montebelluna Treviso(IT)

(74) Representative: Da Riva, Ermanno et al
AGENZIA BREVETTI "PORDENONE" Via S.
Ouirino, 9
I-33170 Pordenone(IT)

(54) Driving unit for agricultural transplanting machines.

(57) The driving unit is set up on a support structure (6) and is activated by a rotary motion (B) generated by a disc (10), which is joined eccentrically to a plant distributor (15), linked to a connecting rod (14).

The distributor (15) is provided with a wedge-shaped receptacle (115), with jaws (215), which receptacle (115) because of the eccentric movement (E-E') is wedged in and extracted from the soil.

When it is wedged in, due to the contact with a cam (18), the jaws (215) open themselves (H), so that the plant coming from a supplying plate (11) and passing through a duct (12), from the receptacle (115) be put into the cavity prepared by the wedge.

Then, the jaws (215) reclose themselves by a resilient self-recovery action.

The connecting rod (14) is linked to the duct (12), so as the plants from the plate (11) arrive to the wedge-shaped receptacle (115), independently from the position of the eccentric movement of the distributor (15).

Fig.1

The driving unit of the present invention is a set of operatively integrated apparatuses, which are all dependent from the activating driving control determined by the movement of a structure drafted by a self-propelled vehicle.

Therefore, the plants transplantation cycle is performed with a set of consecutive dynamic movements of said apparatuses as an assembly providing for giving a physiognomy to the main characterized based upon the possibility to arrange several driving units on the drawbar and a transplantation cycle even of 3,500 plants/hour, in particular transplantations with rubbish covering the soil, without pulling away the plastic film laid on the soil.

This latter advantage is obtained by the dynamic movement of the operator element which is putting the plant, after that the cavity has been effected on the soil, into which the plant is transplanted.

The constructive and operative characteristics of the driving unit referred to are described in the following text, with the aid of the accompanying drawing, wherein:

- fig, 1 illustrates a view of a side of a driving unit;
- fig, 2 illustrates the detail obtained from the fig, 1 and relating to the dynamic assembly for putting the plant;
- fig, 3 illustrates the cross-section "A" taken on the plant putting element.

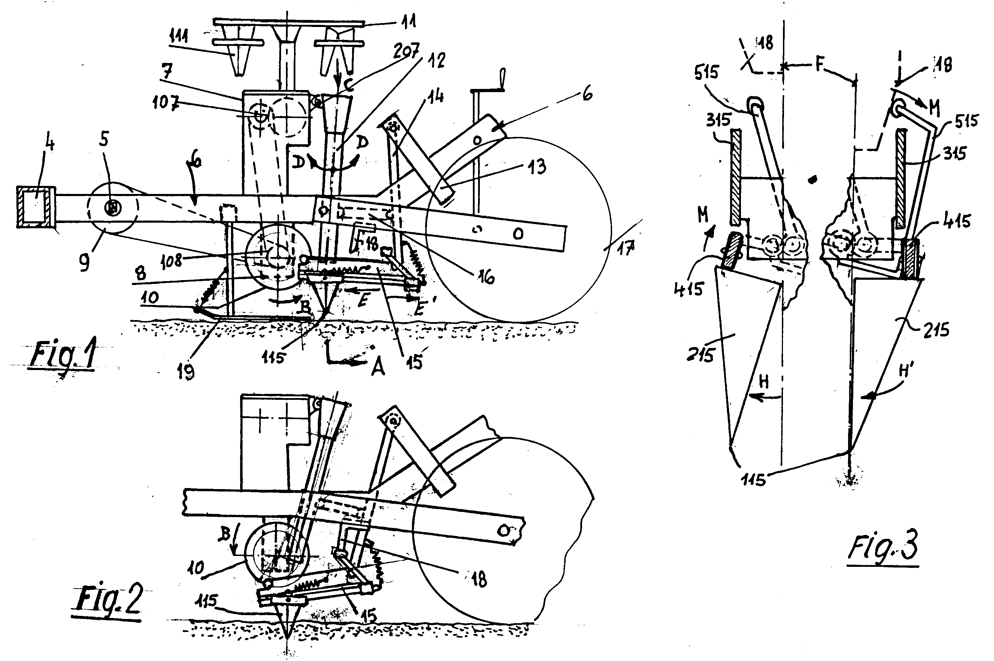

The driving unit (see fig. 1 and 2) is to be built in as a set of one or more units, in accordance with the assemblings of similar machines, on the transverse bar 4 to be joined to the draft self-propelled vehicle.

Wheels which are transversally opposite to each other (not illustrated) provide for a sliding support on the soil of the foreseen driving unit (s), which wheels transmit through their axle the rotary motion to a transverse axle 5 by means of a toothed-wheel 9 (and chain) for each driving unit.

Each unit is constituted by a support structure 6 shaped as a fork, which is axially extended and at its upper side is predisposed to carry a box 7 housing gears 107 and at its lower side a bracket 8, always housing gears 108.

The resulting effect to be obtained by said gears and depending on adequate ratios of interdependent angular velocity is:

- the rotation "B" of a vertical disc 10 freely rotatably fitted on the bracket 8, and the rotation on the horizontal plane of a plate 11, which is preformed with a set of circumferentially disposed cups 111 into which the plant to be transplanted is admitted manually by the operator.

In turn, this plate at steady and continuous periods of time - determined by the advancing movement of the self-propelled vehicle - due to known apparatuses or anyhow apparatuses which are unimportant from the inventive point of view - at a tangential position thereof presents the cups, in order that their bottom can be opened and, due to the gravity "C", let to fall down the plant which has been put by the operator therein.

A duct 12 is joined at 207 on the box 7, on the vertical trajectory of said tangential position, which duct in a compulsory way is being oscillating along the axial vertical plane, in the direction "D".

The support structure 6 at its cantilevered end is turned upward, to engage by a pair of cross-shaped brackets 13 jointed on a stud the upper end of a connecting rod 14, which in turn is engaged with its opposite lower end with the structure of a distributor 15 of plants to be transplanted.

The opposite head of this distributor is always joined, but in an eccentric way, to the vertical disc 10, whose rotary motion indicated by "B" provides for transmitting the movement on axial alternate directions E-E' to the distributor and consequently the oscillation to the connecting rod 14; nay, is really this latter which transmits the same oscillation (D) to the duct 12, which on this occasion has been connected by connecting means 16 to the same connecting rod.

The distributor is of a substantially fork shaped structure, which at its bottom plane is predisposed for receiving a hollow receptacle 115 of pyramidal shape, which is turned upside down and oriented toward the soil and is constituted by two openable and reclosable jaws 215 (see fig, 3). The position of the receptable on the structure is so designed that it is arranged vertically below the duct outlet, so that being both submitted to a concordant movement having a same source, for any position of both, it is obtained that the plant being coming down into the duct always finds the receptacle ready for collecting it.

Moreover, the position of the receptacle 115 depends on the links of the distributor 15, so as by way of example a dead center of the movement finds itself at a lowermost level, corresponding to the wedging in of the receptacle in the soil (fig, 2) in a substantially orthogonal position thereto, for a short moment and as much short displacement (advancement) of the whole tool.

During this wedged in condition, the jaws 215 are opened in order that the plant falls down in the cavity excavated by the same receptacle; then, the jaws are automatically reclosed by the recovery action of a spring, at the beginning of the step in which the receptacle is extracted from the soil, and remain at their closed condition up to the following transplantation operation.

When the tool is advanced on the soil, two wheels 17 which are frontally convergent at the position in which they are approached to the soil provide for conveying and pressing the ground around the plant.

In particular, in the case in which an operation for covering the soil with rubbish is to be performed, a sliding block 19 is fitted to the fork shaped structure 6, which block skims slightly the plastic film so as to avoid the burrs or tearings thereof during the wedging in and extraction operations of the receptacle, as well as to provide for the correct protection of the plant during both the transplantation and the growth thereof.

The opening of the jaws 215 of the receptacle (see fig, 3) depends on the contact of the distributor with a cam 18, which is projected from the fork shaped structure 6, at a suitable level on the trajectory of the movement E-E' of the distributor.

Fig. 3 illustrates a possible hypothesis of a constructive characteristic of the distributor and the dynamic movements thereof, wherein the figure is subdivided in two parts with respect to the plane of the symmetry axis "F", on the left with both the jaws 215 being opened, on the right being closed.

The structure is formed by two upper sides 315 joined to form one piece by the engaging studs and to the connecting rod 1' and the disc 10, and by two lower sides 415 which are movable angularly on themselves due to the effect of transversal head linking studs.

The studs on a head are preformed as two toothed-wheels meshed like a differential gear.

The toothed-wheels are provided with an outer stylus arm 515 adapted to contact the cam 18, when the jaws are being opened ("H").

The displacement or spreading apart of the arms "M" (due to the effect of the cam) influences the lower sides 415, each of which is provided with a jaw.

As a matter of fact, the jaws are hinged to the sides 415 by means of a guiding sliding block, so that during the wedging in condition they are self-oriented themselves orthogonally to the soil, being controlled by a compensating spring.

## Claims

1. Driving unit for agricultural transplanting machines to be prearranged as a set of one or more units on a bar (4) drafted by a self-propelled means, which is activable by a driving rotary motion provided by changing the advancing movement of the bar, characterized by a support structure (6) predisposed with an arrangement (9,107) for transmitting the driving rotary motion to a vertical axle situated above the structure and to a horizontal axle situated below the structure.

2. Driving unit according to the previous claim, characterized by operator means providing for supplying the plant for the transplantation, consisting of:
   - a plate (11) keyed horizontally on the rotary axle situated above the structure, which is predisposed with circumferentially distributed cups (111), which one after the other open themselves without solution of continuity at the level of a vertical plane, in order to let to fall down (C) the plant which has been put in advance therein;
   - a vertically keyed disc (10) hinged to the horizontal axle situated below the structure;
   - a duct (12), vertically hinged at the level of the falling plane (C) of the plants;
   - a distributor (15) of plants, eccentrically engaging with a stud the vertical disc (10) and a connecting rod (14), which is induced to oscillate on the stud due to the effect of the eccentric movement (E-E') of the distributor and which transmits the oscillation to the duct (12).

3. Driving unit according to the previous claims, characterized by devices for controlling the same transplantation operation, consisting of:
   - a receptacle (115) fitted to the distributor (15) and constituted by a hollow wedge, of pyramidal shape, which is turned upside down and is wedged in the soil at each eccentric turn (B) of the disc, which wedge is formed by two jaws (215) which open themselves (H) during the wedging in operation and reclose themselves (H') by a self-recovery action during their extraction, said receptacle (115) being always disposed on the outlet plane of the duct (12) for whatever concordant position of both the same duct (12) and the distributor (15);
   - a firm cam (18) which interferes on the eccentric trajectory (E-E') of the distributor (15) to control the operation of the pyramidal wedge.

4. Driving unit according to the previous claims, characterized by subsidiary elements such as:
   - two wheels (17), frontally convergent on the trajectory of the transplantation operations;
   - a sliding block (19) skiming the film spread on the track of the transplantation operations involving the covering of soil with rubbish.

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C-362 312 (VARAUS)<br>* the whole document *<br>--- | 1,2,3 | A01C9/00<br>A01C11/02 |
| X | FR-A-740 272 (ATELIERS ET CHANTIERS DE BRETAGNE)<br>* the whole document *<br>--- | 1,2,3,4 | |
| A | FR-A-1 066 888 (LE JOLY)<br>* page 1, paragraph 9 - page 4; figures 1,2C *<br>--- | 3,4 | |
| A | NL-A-8 301 132 (STATE OF ISRAEL)<br>* page 3, line 12 - page 6; figures 1-4 *<br>--- | 1,2 | |
| A | EP-A-0 266 643 (SCUDELLARO)<br>* column 2, line 48 - column 6, line 19; figures 1-7 *<br>----- | 4 | |

| | | | TECHNICAL FIELDS SEARCHED (Int. Cl.5) |
|---|---|---|---|
| | | | A01C |

The present search report has been drawn up for all claims

| Place of search | Date of completion of the search | Examiner |
|---|---|---|
| THE HAGUE | 18 FEBRUARY 1992 | VERMANDER R.H. |

EPO FORM 1503 03.82 (P0401)